# EUROPÄISCHE PATENTSCHRIFT

(11) **EP 0 691 316 B1**
(45) Veröffentlichungstag und Bekanntmachung des Hinweises auf die Patenterteilung: **28.07.1999**
(21) Anmeldenummer: 95107970.6
(22) Anmeldetag: 26.05.1995
(51) Int. Cl.: C05F 17/00, C05F 17/02

(54) **Verfahren und Vorrichtung zur aeroben Zersetzung von organischen Bestandteilen**
Process and device for aerobic decaying of organic substances
Procédé et appareil pour la décomposition des substances organiques

(30) Priorität: 05.07.1994 DE 4423453
(43) Veröffentlichungstag der Anmeldung: 10.01.1996
(73) Patentinhaber: ML Entsorgungs- und Energieanlagen GmbH, D-40880 Ratingen (DE)
(72) Erfinder: Dolle, Lothar, D-44627 Herne (DE); Listringhaus, Walter, Dipl. Ing., D-45731 Waltrop (DE); Platen, Elmar, Dipl. Ing., D-46723 Kevelaer (DE); Vollmer, Friedel, Dipl. Ing., D-44652 Herne (DE)
(74) Vertreter: Vomberg, Friedhelm, Dipl.-Phys.

(56) Entgegenhaltungen:
- EP-A- 0 198 465
- WO-A-92/18611
- WO-A-93/23351
- DE-A- 3 923 641
- FR-A- 2 519 966
- US-A- 4 798 802

## Beschreibung

Die Erfindung betrifft ein Verfahren zur aeroben Zersetzung von organischen Bestandteilen in zwei Phasen, wobei in der ersten Phase eine 2 bis 20 Tage andauernde Fermentierung in einem oder mehreren abgeschlossenen Behältern erfolgt, denen regelbar oder steuerbar in Anhängigkeit der sich während der Fermentation einstellenden Temperatur und/oder Feuchtigkeit Luft zu- und abgeführt wird, und in der zweiten Phase die nach Abbruch der Fermentierung aus den Behältern erhaltenen organischen Bestandteile einer Nachrotte unterzogen werden.

Die Erfindung betrifft ferner eine Vorrichtung zur Durchführung des vorgenannten Verfahrens mit mindestens einem an eine Belüftungseinrichtung angeschlossenen und mit einer Einrichtung zur Messung der Rottetemperatur oder der Rottefeuchtigkeit ausgestatteten Rottebehälter und einer Nachrottevorrichtung.

Die sogenannte Bioabfall-Kompostierung dient zur Reduzierung der zu deponierenden oder zu verbrennenden Abfallmengen und besitzt den Vorteil, daß ein großer Anteil des Abfallaufkommens wieder verwertbar ist.

Aus der DE 36 31 170 wird ein Verfahren und eine Vorrichtung zur Fermentierung von Rückständen mit hohem Anteil an organischen Bestandteilen in einem abgeschlossenen Behälter beschrieben, dem Luft zugeführt bzw. abgeführt werden kann, wobei die abgeführte Luft biologisch gereinigt wird. In der Praxis hat sich dieses Verfahren unter Verwendung von mehreren mobilen Rottebehältern bewährt, in denen jeweils in einer ersten Rottephase Mikroorganismen in einem mittleren Temperaturniveau zwischen 40°C und 50°C den leicht abbaubaren Anteil von langkettigen organischen Verbindungen, wie Zellulose, Fett und Eiweiß, zerlegen. In dem anschließenden thermophilen Rottestadium steigt die Temperatur auf mehr als 60°C an, wodurch die Hygienisierung des Biomaterials bewirkt wird.

Nach Abschluß der Intensivrotte, d.h. nach 2 bis 20 Tagen, reift das Material auf Nachrottemieten nach.

Die WO 92/18611 beschreibt ein Verfahren zur aeroben Zersetzung von organischen Bestandteilen, die in eine Drehtrommel gegeben werden, wo sie unter ständiger Belüftung und Bewegung drei Tage verweilen. Hiernach werden die organischen Bestandteile einer Nachrotte zugeführt, wo sie ca. 14 Tage in Kanälen mittels eines mechanischen Umsetzgerätes zum Austragsende weiterbewegt werden. Die Abführung der Rottegase sowie die betreffende Rückführung in die Drehtrommel und/oder die Nachrottekanäle soll prozeßfördernd wirken.

Die EP 0 198 465 A2 beschreibt ein Verfahren zum Entsorgen von organischen Abfällen mit Hilfe dezentral aufgestellter Behälter, die nach ihrer Befüllung mit den Abfällen an einen zentralen, eine Behälter-Anschlüsse, Steuer- und Absaugleitungen umfassende Rotte-Steueranordnung aufweisenden Sammelplatz überführt werden, um dort nach dem Impfen in einem das Rotten der organischen Abfälle egalisierenden Impfsubstrat und ggf. mit einem Sauerstoffspender zwecks geregelter Belüftung an eine gemeinsame Absaugleitung sowie an Steuerleitungen angeschlossen und belüftet zu werden, um dann nach 10 bis 30, vorzugsweise nach 14 Tagen von der Rotte-Steuer-Anordnung gelöst und entleert zu werden, wobei die gerotteten Behälterinhalte einer Nachrotte zugeführt werden. Die Nachrotte wird in Mieten lose aufgeschichtet und kann nach 20 Tagen abgepackt oder als Schüttgut einer weiteren Verwendung zugeführt werden. Alternativ kann anstelle der Nachrotte die Rotte in den vorbeschriebenen Behältern bis zu 30 Tagen ausgedehnt werden.

Es ist Aufgabe der vorliegenden Erfindung, die gesamte Rottezeit zu minimieren.

Diese Aufgabe wird durch ein Verfahren nach Anspruch 1 gelöst.

Während nach dem Stand der Technik die zweite Phase mehr oder weniger unkontrolliert ablief und allenfalls die Miete mit anderen Mieten entsprechend dem bei der Verrottung entstehenden Schwund zusammengelegt wurde, wird nunmehr gezielt die Nachrotte im wesentlichen ständig belüftet und ein- oder mehrfach umgesetzt. Hierdurch wird die aerobe Zersetzung auch in der Nachrottephase optimiert mit dem Ergebnis einer erheblich verkürzten Kompostierungsdauer.

Vorzugsweise wird die Luftzu- und -abfuhr der ersten Phase, d.h. der geschlossenen Behälter, und/oder die Belüftung der Nachrotte zumindest zum Teil in einem geschlossenen Kreislauf durchgeführt und die Abluft wird biologisch gereinigt. Der Abschluß der ersten und der zweiten Phase gegenüber der Umgebung hat den erheblichen Vorteil, daß Geruchsbelästigungen, wie sie bei Verrottungsprozessen auftreten, ebenso vermieden werden wie die Freisetzung von Bakterien oder Pilzen, die zum Ingangbringen und Aufrechterhalten der Verrottung erforderlich sind.

Nach einer weiteren Ausgestaltung der Erfindung werden zur Belüftung der Nachrotte bis zu 80 % der Nachrotteabluft zurückgeführt, was im übrigen die Menge des zu filternden Gases erheblich minimiert.

Verrottungsbeschleunigend wird vorzugsweise zur Belüftung der Nachrotte Abluft aus der ersten Phase beigemengt, beispielsweise bis zu 20 %, bezogen auf die der Nachrotte zugeführten Gasmenge.

Während der biologische Abbauprozeß der ersten Phase (in einem oder mehreren geschlossenen Behältern) stationär, d.h. ohne Bewegung und Umsetzung des Rottematerials, abläuft, wird die Nachrotte unter Bewegung belüftet. Die Nachrotte wird auf einem linear bewegten, mit Durchbrechungen zur Luftzufuhr und zum Flüssigkeitsablauf ausgestatteten Förderer aufgegeben und während der Nachrottezeit zum Austragsende weiterbewegt.

Der genannte Förderer befindet sich in einer gegenüber der Umgebung abgeschlossenen Halle oder einem Behälter, der an einer Stirnseite befüllt wird. Während der Nachrottezeit durchläuft das Rottematerial den Nachrottebehälter bzw. die Nachrottehalle bis hin zum Austragsende, wo der Kompost abgefahren werden kann. Der Förderer kann kontinuierlich oder quasi kontinuierlich betrieben werden, so daß sich eine Gesamtrottezeit von 8 Wochen ergibt, wovon die Nachrotte 6 bis 7 Wochen beträgt.

Vorzugsweise arbeitet ein (ortsfestes) Umsetzgerät über die gesamte Förderbreite oder ist quer zur Förderrichtung so verfahrbar, daß die gesamte über die betreffende Fördererbreite aufgeschichtete Nachrotte umgesetzt werden kann.

Vorzugsweise wird die Nachrotte - abgesehen von der geregelten oder gesteuerten Luftzu- und -abfuhr in einem nach außen abgeschlossenen System durchgeführt. Durch diese Maßnahme können unabhängig von der Außentemperatur, stark schwankenden Luftfeuchtigkeit und/oder Windbewegungen jeweils die für die Nachrotte günstigsten Bedingungen eingestellt werden. Im Unterschied zu den nach dem Stand der Technik bekannten Verfahren, die von Anfang an das organische Material ständigen Umsetzungen und/oder Belüftungen unterziehen, wird bei der vorliegenden Erfindung der zweiphasige Verrottungsprozeß gewählt, der sich - wie oben dargelegt - in eine stationäre Phase, einer Intensivrotte, und eine dynamische Phase, d.h. Nachrotte unter Umsetzung und Bewegung des Mietengutes, aufteilt.

Nach einer Weiterbildung der Erfindung wird die Nachrotte im Umluftbetrieb belüftet und die Luftdurchsatzmenge nach Maßgabe der Nachrottetemperatur und des Sauerstoffgehaltes der Nachrotteabluft geregelt. Hierdurch ist es möglich, den Luftdurchsatzbedarf in der Nachrotte dem aktuell vorhandenen Rottegrad optimal anzupassen. Die Nachrottebelüftung kann als Druck- und/oder Saugbelüftung, vorzugsweise über den Boden eines Nachrotte-Tunnelbehälters, durchgeführt werden.

Vorrichtungstechnisch wird die Aufgabe durch die Vorrichtung nach Anspruch 6 gelöst.

Weiterbildungen der Vorrichtung sind in den Ansprüchen 7 bis 12 beschrieben.

So besitzt die Nachrottevorrichtung mindestens eine mit einem Biofilter versehene Abluftleitung, wobei der Biofilter die Abluftreinigung zur Vermeidung von Geruchsbelästigungen der Außenumgebung dient.

Wie bereits zuvor beschrieben, ist in der Nachrottevorrichtung die Abluft bis zu 80 % im Kreislauf rückführbar und zur Nachrottebelüftung wieder verwendbar, was durch eine entsprechende Leitungsführung gewährleistet wird. Vorzugsweise ist die Abluftleitung des oder der Rottebehälter mit der Zuluftleitung der Nachrottevorrichtung verbunden.

Zur Mischung der Zuluft in der Nachrottevorrichtung aus Abluftanteilen des Rottebehälters, rückgeführten Abluftanteilen der Nachrottevorrichtung und/oder der Umgebungsluft ist nach einer weiteren Ausgestaltung der Erfindung eine Regel- oder Steuereinrichtung vorgesehen. Im Falle einer Steuereinrichtung wird die Mischung der Zuluft nach Maßgabe der Nachrottetemperatur und/oder des Sauerstoffgehaltes in der Abluft der Nachrottevorrichtung durchgeführt, wozu die genannten Fühler mit einem Leitrechner als Regeleinrichtung verbunden sind.

Die (Intensiv)Rottevorrichtung und die Nachrottevorrichtung bilden - bis auf die biogefilterte Abluft - ein nach außen im wesentlichen abgeschlossenes System, so daß Umwelteinflüsse, wie insbesondere Geruchsbelästigungen, vermieden werden.

Die Nachrottevorrichtung besitzt einen als Siebboden ausgebildeten Linearförderer, durch den die Nachrotte belüftbar und/oder entwässerbar ist. Zur Förderung und Umsetzung der Nachrotte ist mindestens ein quer zur Förderrichtung der Nachrotte angeordnetes oder bewegliches Umsetzgerät vorgesehen. Die Nachrottevorrichtung kann insbesondere als Tunnelreaktor ausgestaltet sein, der einen Boden aus Stahlbetonfertigteilen aufweist, in den Rohre für die Druck- und/oder Saugbelüftung und Entwässerung integriert sind.

Je nach anfallenden, zu kompostierenden Mengen kann es nach einer weiteren Ausgestaltung der Erfindung vorteilhaft sein, mehrere Nachrottevorrichtungen nebeneinander anzuordnen. Um Stillstandszeiten des Umsetzgerätes zu vermeiden, ist vorzugsweise ein einziges Umsetzgerät für mehrere Nachrottevorrichtungen vorgesehen, wobei das Umsetzgerät mit Hilfe von Querschiebeeinrichtungen von einer Nachrottevorrichtung in eine andere erfolgen kann. Bei mehreren Nachrottevorrichtungen kann nach einer weiteren Ausgestaltung der Erfindung auch ein gemeinsames einziges Eintrags- und/oder Austragssystem vorgesehen sein.

Ein Ausführungsbeispiel der Erfindung ist in den Zeichnungen dargestellt. Es zeigen
- Fig. 1: die Grundzüge der Verfahrensführung in einem Blockdiagramm und
- Fig. 2a, b: zwei schematische Ansichten einer Vorrichtung zur Durchführung dieses Verfahrens.

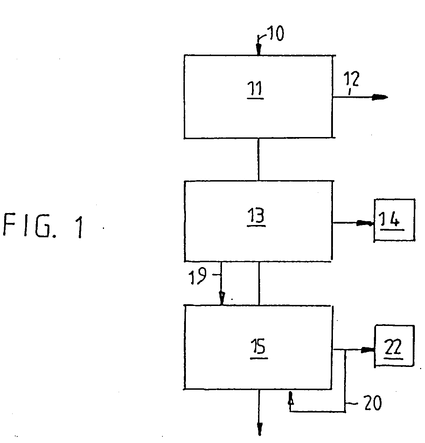

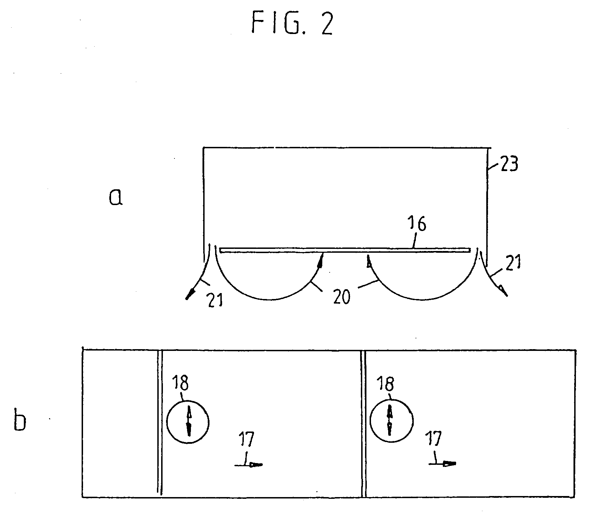

Wie in Fig. 1 dargestellt, wird die organische zersetzungsfähige Masse 10 in einer ersten Stufe 11 zerkleinert, gemischt und homogenisiert. Etwaige Störstoffe, wie insbesondere Metallteile 12, werden entfernt. Die homogenisierte Masse wird der Intensivrotte 13 zugeführt, deren Zuluft- und Abluftzufuhr mittels eines Prozeßrechners gesteuert wird, der in dem geschlossenen Behälter jeweils vorliegende Rottetemperaturen und Rottegutfeuchte mißt. Abluft gelangt über den Biofilter 14 ins Freie. Nach 7 bis 14 Tagen wird das Rottematerial einem oder mehreren Behältern entnommen und einer Nachrotte 15 zugeführt, indem das Rottematerial auf ein Förderband 16 (siehe Fig. 2a, b) beispielsweise ein Platten-Förderband mit Siebschlitzen, aufgegeben wird, welches linear das Rottegut zum Austragsende fördert, wobei quer zur Förderrichtung 17 verfahrbare Umsetzgeräte 18 das Nachrottegut auflockern und neu mischen. Während der Linearförderung wird das Nachrottegut über den Siebboden 16 ständig belüftet. Der das Nachrottegut verlassende Luftstrom wird zu 80 % (Pfeile 20) rückgeführt, d.h., abermals über den Boden 16 in das Nachrottegut eingeblasen. Die restliche Abluftmenge 21 wird über einen Biofilter 22 in die Außenumgebung abgeführt. Der Linearförderer 16 befindet sich in einem geschlossenen Behälter oder einer geschlossenen Halle oder ist von einem im Querschnitt U-förmigen Haubendach 23 abgedeckt, dessen Schenkel bis zum Boden bzw. bis unterhalb der Förderebene reichen. Hierdurch können Geruchsbelästigungen, wie sie nach bei dem Stand der Technik bekannten Nachrotten auftreten, verhindert werden. Eine Beschleunigung der Nachrotte ist möglich, wenn bis zu 20 % der Abgase 19 aus der ersten, der stationären Phase 13, über den Boden 16 eingeblasen werden.

## Patentansprüche

1. Verfahren zur aeroben Zersetzung von organischen Bestandteilen in zwei Phasen, nämlich einer ersten Phase (13), in der eine 2 bis 20 Tage andauernde Fermentierung in einem oder mehreren abgeschlossenen Behältern erfolgt, denen regelbar oder steuerbar in Abhängigkeit der sich während der Fermentation einstellenden Temperatur und/oder Feuchtigkeit Luft zu- und abgeführt wird, wobei der biologische Abbauprozeß stationär, nämlich ohne Bewegung und Umsetzung des Rottematerials abläuft, und einer zweiten Phase (15), in der nach Abbruch der Fermentierung aus den Behältern erhaltene organischen Bestandteile einer Nachrotte unterzogen werden, bei der die Nachrotte auf einem linear bewegten, mit Durchbrechungen zur Luftzufuhr und zum Flüssigkeitsablauf ausgestatteten Förderer (16) aufgegeben und während der Nachrottephase zum Austragsende weiter bewegt wird, wobei die Nachrotte im wesentlichen ständig beluftet und mindestens einmal umgesetzt wird.

2. Verfahren nach Anspruch 1, dadurch gekennzeichnet, daß die Luftzu- und -abfuhr der ersten Phase (13) und/oder die Belüftung der Nachrotte (15) zumindest zum Teil in einem geschlossenen Kreislauf erfolgt und die Abluft biologisch gereinigt wird, wobei vorzugsweise zur Belüftung der Nachrotte (15) bis zu 80 % der Nachrotte-Abluft (20) zurückgeführt wird und/oder Abluft (19) aus der ersten Phase (13) beigemengt wird.

3. Verfahren nach einem der Ansprüche 1 oder 2, dadurch gekennzeichnet, daß zum Umsetzen der Nachrotte mindestens ein Umsetzgerät (18) über die gesamte Förderbreite arbeitet und quer zur Förderrichtung 17 verfahren wird.

4. Verfahren nach einem der Ansprüche 1 bis 3, dadurch gekennzeichnet, daß die Nachrotte (15) - abgesehen von der geregelten oder gesteuerten Luftzu- und -abfuhr - (20, 21) in einem nach außen abgeschlossenen System durchgeführt wird.

5. Verfahren nach einem der Ansprüche 1 bis 4, dadurch gekennzeichnet, daß die Nachrotte im Umluftbetrieb belüftet und die Luftdurchsatzmenge nach Maßgabe der Nachrottetemperatur und/oder des Sauerstoffgehaltes der Nachrotte-Abluft geregelt wird, wobei die Nachrottebelüftung eine Druck- und/oder Saugbelüftung ist.

6. Vorrichtung zur Durchführung des Verfahrens nach einem der Ansprüche 1 bis 5, mit mindestens einem an eine Belüftungseinrichtung angeschlossenen und mit einer Einrichtung zur Messung der Rottetemperatur oder der Rottefeuchtigkeit ausgestatteten abgeschlossenen stationären Rottebehälter und einer als Tunnelreaktor ausgebildeten Nachrottevorrichtung, die einen als Siebboden ausgebildeten Linearförderer (16), durch den die Nachrotte mittels einer Belüftungseinrichtung belüftbar und entwässerbar ist und mindestens ein quer zur Förderrichtung der Nachrotte angeordnetes oder bewegliches Umsetzgerät (18) aufweist, wobei die Abluftleitung des oder der stationären Rottebehälter mit der Zuluftleitung der Nachrottevorrichtung verbunden ist.

7. Vorrichtung nach Anspruch 6, dadurch gekennzeichnet, daß die Nachrottevorrichtung mindestens eine mit einem Biofilter (22) versehene Abluftleitung aufweist.

8. Vorrichtung nach Anspruch 6 oder 7, dadurch gekennzeichnet, daß die Abluftleitung des oder der Rottebehälter mit der Zuluftleitung der Nachrottevorrichtung verbunden ist, wobei vorzugsweise eine Regel- oder Steuereinrichtung zur Mischung der Zuluft in der Nachvorrichtung aus Abluftanteilen des Rottebehälters, rückgeführten Abluftanteilen der Nachrottevorrichtung und/oder der Umgebungsluft vorgesehen ist.

9. Vorrichtung nach Anspruch 8, gekennzeichnet durch mindestens einen in die Nachrottemiete hineinragenden Temperaturfühler und/oder mindestens einen in der Nachrotte-Abluftleitung angeordneten Fühler zur Messung des Sauerstoffgehaltes, wobei die Fühler mit einem Leitrechner als Regeleinrichtung zur Mischung der Zuluft in der Nachrotte verbunden sind.

10. Vorrichtung nach einem der Ansprüche 6 bis 9, dadurch gekennzeichnet, daß die Nachrottevorrichtung und die Rottevorrichtung ein nach außen im wesentlichen - bis auf die biogefilterte Abluft - abgeschlossenes System bilden.

11. Vorrichtung nach einem der Ansprüche 6 bis 10, dadurch gekennzeichnet, daß die Nachrottevorrichtung ein Tunnelreaktor ist, der einen Boden aus Stahlbetonfertigteilen aufweist, in den Rohre für die Druck- und/oder Saugbelüftung integriert sind, wobei vorzugsweise mehrere Nachrottevorrichtungen nebeneinander angeordnet sind, die ein einziges Umsetzgerät besitzen, das über Querverschiebeeinrichtungen sukzessive in jede Nachrottevorrichtung einsetzbar ist, wobei weiterhin vorzugsweise mehrere Nachrottevorrichtungen ein einziges Eintrags- und/oder Austragssystem aufweisen.

## Claims

1. Process for the aerobic decomposition of organic components in two phases, that are in a first phase (13) fermentation that continues for a period ranging from two to twenty days in one or a plurality of closed containers into which air is introduced and from which air is removed by regulating or controlling the introduction and removal of the air as a function of temperature and/or humidity during the fermentation process whereby the biological decomposition process takes place in a stationary manner, that is without movement and without turning over the retting material, and in a second phase (15), subjecting the organic components that are obtained from the containers after the conclusion of the fermentation process to after-retting, wherein the after-ret is placed on a conveyor (16) that moves linearly and is provided with openings for introducing air and for draining off liquid, and is moved to the removal end, whereby the after-ret is essentially ventilated constantly and turned over at least once.

2. Process according to claim 1, characterised in that the introduction and removal of air into and from the first phase (13) and/or the ventilation of the after-ret (15) is effected at least in part in a closed circuit and the exposed air is biologically purified, whereby preferably up to 80 % of the after-ret exhaust air (20) is returned in order to ventilate the after-ret (15) and/or exhaust air (19) from the first phase (13) is added in order to ventilate the after-ret (15).

3. Process according to one of the claims 1 or 2, characterised in that at least one turning apparatus (18) works across the whole width of the conveyor and is moved transversely to the direction of movement (17) of the conveyor.

4. Process according to one of the claims 1 to 3, characterised in that the after-retting process (15) is conducted in a system that is closed off from the outside, except for the regulated or controlled introduction and removal of air (20, 21).

5. Process according to one of the claims 1 to 4, characterised in that the after-ret is ventilated by circulating air and the quantity of air that is passed through is regulated according to the after-retting temperature and/or the oxygen content in the after-ret exhaust air, whereby the after-ret ventilation is a pressure and/or a suction ventilation.

6. Apparatus for carrying out the process according to one of the claims 1 to 5, this having at least one closed stationary retting container that is connected to a ventilating system and a system to measure the retting temperature or the retting humidity, and having an after-retting apparatus, formed as a tunnel-reactor and having a linear conveyor formed as a sieve base (16) through which the after-ret can be ventilated and/or the water removed therefrom and having at least one turning apparatus (18) that is arranged transversely to the conveyor system for the after-ret or which is movable, whereby the exhaust line of the retting container(s) is/are connected to the feed air line of the after-retting apparatus.

7. Apparatus as defined in claim 6, characterised in that the after-retting apparatus incorporates at least one exhaust air line that includes a biological filter (22).

8. Apparatus as defined in claim 6 or 7, characterised in that the exhaust air line of the retting container(s) is/are connected to the feed air line of the after-retting apparatus, whereby preferably a regulating control system is provided to mix parts of the feed air in the after-retting apparatus from exhaust air from the retting container, parts from returned exhaust air from the after-retting apparatuses and/or from local air.

9. Apparatus as defined in claim 8, characterised by at least one temperature sensor that extends into the after-ret silage and/or at least one sensor that is arranged in the after-ret exhaust air line and used to measure the oxygen content, the sensors being connected to a master computer as a control system for mixing the feed air in the after-ret.

10. Apparatus as defined in one of the claims 6 to 9, characterised in that the after-retting apparatus and the retting apparatus from an essentially closed system, except for the biologically filtered exhaust air.

11. Apparatus as defined in one of the claims 6 to 10, characterised in that the after-retting apparatus is a tunnel-type reactor that has a base of ferro-concrete parts, in which pipes for the pressure and/or suction ventilation are integrated, whereby preferably a plurality of after-retting apparatuses are arranged adjacent to each other, these having a single turning apparatus that can be used in each of the after-retting apparatuses in succession, by way of a transverse movement system, it being preferred that a plurality of after-retting apparatuses have a single input and/or removal system.

## Revendications

1. Procédé pour la décomposition aérobie de composants organiques en deux phases, à savoir en une première phase (13) où a lieu une fermentation qui dure entre 2 et 20 jours, dans un ou plusieurs réservoir(s) fermé(s) auxquels est amené de l'air et desquels est enlevé de l'air de manière réglable ou commandée en fonction de la température et/ou de l'humidité se présentant durant la fermentation, le processus biologique de décomposition se déroulant de façon stationnaire, donc sans mouvement et déplacement de la matière soumise à la pourriture, et en une deuxième phase (15) où les composants organiques obtenus des réservoirs après avoir arrêtée la fermentation sont soumis à une pourriture ultérieure dans le cas de laquelle la matière soumise à la pourriture ultérieure est placée sur un convoyeur (16) déplacé linéairement et muni d'ouvertures destinées à l'introduction d'air et à l'écoulement de liquide, et est déplacé vers le point de déversement durant la phase de la pourriture ultérieure, la matière soumise à la pourriture ultérieure étant pour l'essentiel aérée permanentement et étant déplacée une fois du moins.

2. Procédé selon la revendication 1, caractérisé par le fait que l'amenée et l'évacuation d'air de la première phase (13) et/ou l'aération de la matière (15) soumise à la pourriture ultérieure est effectué au moins en partie dans un circuit fermé et que l'air d'évacuation est purifié de manière biologique, de préférence jusqu'à 80% de l'air d'évacuation (20) de la matière soumise à la pourriture ultérieure étant reconduit et/ou de l'air d'évacuation (19) provenant de la première phase (13) étant ajouté afin d'aérer la matière (15) soumise à la pourriture ultérieure.

3. Procédé selon l'une des revendications 1 ou 2, caractérisé par le fait que, pour déplacer la matière soumise à la pourriture ultérieure, du moins un appareil de déplacement (18) travaille sur l'ensemble de la largeur du convoyeur et est mû transversalement à la direction de transport (17).

4. Procédé selon l'une des revendications 1 à 3, caractérisé par le fait que la pourriture ultérieure (15) - abstraction faite de l'amenée et de l'évacuation d'air réglée ou commandée (20, 21) - est effectuée dans un système fermé vers l'extérieur.

5. Procédé selon l'une des revendications 1 à 4, caractérisé par le fait que la matière soumise à la pourriture ultérieure est aérée par une circulation d'air et que le débit d'air est réglé au fur et à mesure de la température de la matière soumise à la pourriture ultérieure et/ou de la teneur en oxygène dans l'air d'évacuation de la matière soumise à la pourriture ultérieure, l'aération de la matière soumise à la pourriture ultérieure étant une aération par pression et/ou par aspiration.

6. Dispositif pour la mise en oeuvre du procédé selon l'une des revendications 1 à 5, avec du moins un réservoir fermé stationnaire de pourriture qui est connecté à un dispositif d'aération et est muni d'un dispositif destiné à mesurer la température de la matière soumise à la pourriture ou l'humidité de la matière soumise à la pourriture, et avec un dispositif de pourriture ultérieure réalisé en tant que réacteur tunnel, qui présente un convoyeur linéaire (16) réalisé en tant que fond à tamis à travers lequel la matière soumise à la pourriture ultérieure peut être aérée au moyen d'un dispositif d'aération et l'eau peut être extraite de celle-ci, ainsi que du moins un appareil de déplacement (18) disposé ou mobile transversalement à la direction de transport de la matière soumise à la pourriture ultérieure, la conduite pour l'évacuation d'air du ou des réservoir(s) stationnaire(s) de pourriture étant connectée à la conduite pour l'amenée d'air du dispositif de pourriture ultérieure.

7. Dispositif selon la revendication 6, caractérisé par le fait que le dispositif de pourriture ultérieure présente du moins une conduite pour l'évacuation d'air, qui est pourvue d'un biofiltre (22).

8. Dispositif selon la revendication 6 ou 7, caractérisé par le fait que la conduite pour l'évacuation d'air du ou des réservoir(s) de pourriture est reliée à la conduite pour l'amenée d'air du dispositif de pourriture ultérieure, de préférence un dispositif de réglage ou de commande étant prévu pour mélanger l'air amené dans le dispositif de pourriture ultérieure de parts d'air évacué du réservoir de pourriture, de parts d'air évacué reconduit du dispositif de pourriture ultérieure et/ou d'air ambiant.

9. Dispositif selon la revendication 8, caractérisé par du moins un palpeur de température qui s'étend dans la meule de pourriture ultérieure et/ou par du moins un palpeur qui est disposé dans la conduite pour l'air d'évacuation de la matière soumise à la pourriture ultérieure et destiné à mesurer la teneur en oxygène, les palpeurs étant reliés à un ordinateur pilote en tant que dispositif de réglage pour le mélange de l'air amené dans la matière soumise à la pourriture ultérieure.

10. Dispositif selon l'une des revendications 6 à 9, caractérisé par le fait que le dispositif de pourriture ultérieure et le dispositif de pourriture forment un système pour l'essentiel fermé vers l'extérieur, à l'exception de l'air évacué filtré de manière biologique.

11. Dispositif selon l'une des revendications 6 à 10, caractérisé par le fait que le dispositif de pourriture ultérieure est un réacteur tunnel qui présente un fond d'éléments préfabriqués en béton armé, dans lequel sont intégrés des tuyaux pour l'aération par pression et/ou par aspiration, de préférence plusieurs dispositifs de pourriture ultérieure étant disposés l'un à côté de l'autre qui possèdent un seul appareil de déplacement qui, par l'intermédiaire de dispositifs de déplacement transversal, peut être utilisé successivement dans chaque dispositif de pourriture ultérieure, en outre de préférence plusieurs dispositifs de pourriture ultérieure présentant un seul système de chargement et/ou de déversement.
